# EUROPEAN PATENT APPLICATION

(11) **EP 4 697 416 A1**
(43) Date of publication of application: **18.02.2026**
(21) Application number: 24788587.4
(22) Date of filing: 28.03.2024
(51) Int. Cl.: H01M 4/86, B01J 23/62, H01M 4/90, H01M 4/92, H01M 8/10

(54) **CATALYST PARTICLES, MEMBRANE ELECTRODE ASSEMBLY, AND FUEL CELL**

(30) Priority: 10.04.2023 JP 2023063514
(71) Applicant: Toppan Holdings Inc., Tokyo 110-0016 (JP)
(72) Inventor: KURIHARA, Hitoshi, Tokyo 110-0016 (JP)
(74) Representative: Hoffmann Eitle
(86) International application number: PCT/JP2024/012905
(87) International publication number: WO 2024/214559

(57) **Abstract**

A catalyst particle includes a conductive support and metal particles deposited on the conductive support. the metal particles contain Pt and Sn, the Sn in the metal particles is partially or entirely in form of an oxide, and the metal particles have surfaces at least partially in contact with the ionic liquid.

## Description

### [Technical Field]

The present invention relates to catalyst particles, a membrane electrode assembly including the catalyst particles, and a fuel cell including the membrane electrode assembly.

### [Background Art]

Known polymer electrolyte fuel cells include a fuel cell including an electrolyte layer formed from an ion-exchange resin, a fuel electrode (anode) supplied with fuel, and an oxygen electrode (cathode) supplied with oxygen.

When the anode is supplied with fuel and the cathode is supplied with air, such a fuel cell generates an electromotive force, producing electric power.

Although examples of proposed cathode catalysts include a Pt-loaded carbon catalyst with Pt particles deposited on carbon, the Pt-loaded carbon catalyst has issues with durability. Specifically, the Pt particles deposited on carbon may aggregate or leach into the electrolyte layer, resulting in reduced fuel cell performance.

Patent Literature 1 reports catalyst particles including Pt-loaded carbon particles with Sn oxides disposed on the Pt particles. This literature states that the specific surface area of the platinum particles increases and the tin oxides on the Pt surface inhibit Pt particle aggregation, contributing to both high activity and good durability.

In Non Patent Literature 1, carbon particles loaded with Pt-Sn alloy are heat-treated to induce phase separation into the Pt phase and the SnO₂ phase, producing Pt-SnO₂ particles. This literature reports that the SnO₂ phase donates electrons to the Pt phase, improving Pt activity and inhibiting oxidation.

### [Citation List]

### [Patent Literature]

PTL 1: WO 2014/136798

### [Non-Patent Literature]

NPL 1: Phase Segregated Pt-SnO2/C Nanohybrids for Highly Efficient Oxygen Reduction Electrocatalysis, J. Guan, et al., small, 2020, 16, 2005048

### [Summary of the Invention]

### [Technical Problem]

However, power generation evaluation indicates that a membrane electrode assembly including Pt-SnO₂ catalyst particles has lower I-V characteristics than a membrane electrode assembly including Pt catalyst particles because the hydrophilicity of SnO₂ disposed on the Pt surface makes the catalyst layer prone to flooding, and the heat treatment for forming the SnO₂ phase reduces the crystallinity of carbon, increasing the electron resistivity.

The present inventors have found that the flooding can be prevented by bringing the Pt-SnO₂ particles into contact with an ionic liquid, and the I-V characteristics are improved.

In view of the above, an object of the present invention is to provide catalyst particles, a membrane electrode assembly, and a fuel cell, with the membrane electrode assembly having excellent I-V characteristics.

### [Solution to Problem]

[1] A catalyst particle comprising: a conductive support; and metal particles deposited on the conductive support, in which the metal particles contain Pt and Sn, the Sn in the metal particles is partially or entirely in the form of an oxide, and the metal particles have surfaces at least partially in contact with an ionic liquid.
[2] The catalyst particle according to [1], in which the conductive support comprises carbon and exhibits a G-to-D band peak intensity ratio (G/D ratio) of 1.2 or greater and 2.2 or less in Raman spectroscopy at a laser wavelength of 532 nm.
[3] The catalyst particle according to [1] or [2], in which the Pt and the Sn in the metal particles have an atomic ratio ranging from 3:1 to 10:1.
[4] The catalyst particle according to any one of [1] to [3], in which the ionic liquid is an imidazolium salt.
[5] The catalyst particle according to [4], in which the ionic liquid is a 1-alkyl-3-methylimidazolium bis(trifluoromethanesulfonyl)imide.
[6] The catalyst particle according to [4], in which the ionic liquid is 1-butyl-3-methylimidazolium bis(trifluoromethanesulfonyl)imide.
[7] A membrane electrode assembly comprising:
   a polymer electrolyte membrane; and
   a cathode catalyst layer,
   in which the cathode catalyst layer contains the catalyst particle according to any one of [1] to [6].
[8] The membrane electrode assembly according to [7], in which the cathode catalyst layer further includes a conductive additive.
[9] The membrane electrode assembly according to [8], in which the conductive additive comprises vapor-grown carbon fibers.
[10] A fuel cell comprising the membrane electrode assembly according to [7], [8], or [9].

### [Advantageous Effects of the Invention]

An aspect of the present invention can provide catalyst particles with excellent I-V characteristics, a membrane electrode assembly for a fuel cell, and a fuel cell.

### [Brief Description of the Drawings]

Fig. 1 is a schematic diagram illustrating a whole catalyst particle according to an embodiment of the present invention.
Fig. 2 is a schematic diagram illustrating a surface area of a conductive support in Fig. 1.

### [Description of the Embodiments]

Embodiments of the present invention will now be described with reference to the drawings.

### <Overall Structure of Catalyst Particle>

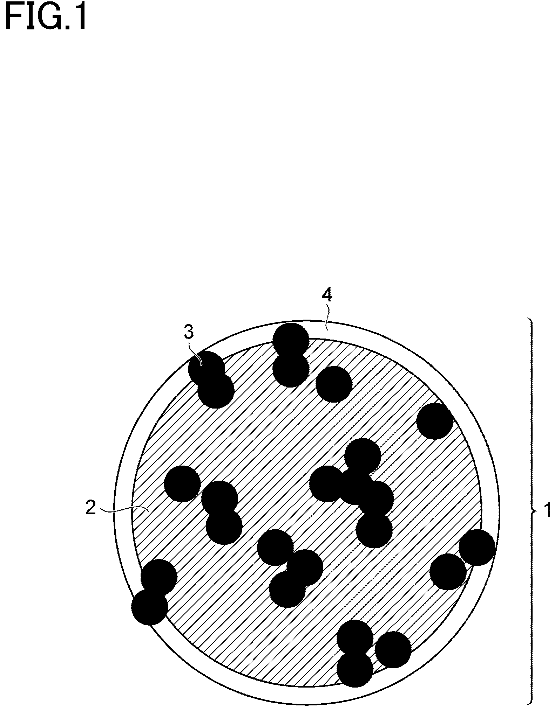

Fig. 1 is a schematic diagram illustrating a whole catalyst particle according to an embodiment of the present invention.

As illustrated in Fig. 1, catalyst particles 1 according to the present embodiment include a conductive support 2, a plurality of metal particles 3 deposited on the conductive support 2, and an ionic liquid 4. Each of these components will now be described in detail.

### (Conductive Support)

The conductive support 2 is not limited to a specific material as long as the support is a particle of a conductive material. The conductive support 2 is preferably a carbon particle. In particular, the conductive supports are preferably carbon particles exhibiting a G-to-D band peak intensity ratio (G/D ratio) of 1.2 or greater and 2.2 or less in Raman spectroscopy. The conductive support 2 preferably comprises carbon particles that exhibit a peak intensity ratio (G/D ratio) greater than or equal to 1.6. In the present embodiment, the laser beam used for Raman spectroscopy has a wavelength of 532 nm. In the present embodiment, the G band in Raman spectroscopy refers to a Raman peak near 1580 cm⁻¹. The D band in Raman spectroscopy refers to a Raman peak near 1360 cm⁻¹.

When the peak intensity ratio (G/D ratio) is smaller than 1.2, the improvement in I-V characteristics may be less significant due to the high electron resistivity. When the peak intensity ratio (G/D ratio) is greater than 2.2, it may be difficult to support metal particles due to the high crystallinity of carbon particles.

### (Metal Particle 3)

The metal particles 3 used for the catalyst particle 1 include Pt and Sn, and the Sn is at least partially or entirely in form of an oxide. Sn oxides can be represented as SnOₓ, and the oxidation state of the Sn is not defined specifically since the oxidation state varies depending on the catalyst synthesis conditions, MEA production conditions, and power generation conditions. However, SnO₂, which is completely oxidized, is chemically stable and thus desirable.

The metal particles 3 may have a metal composition with a Pt:Sn ratio (atomic ratio) ranging from 3:1 to 10:1. When the Sn content is higher than a Pt:Sn ratio of 3:1, the active Pt site is reduced since Sn and tin oxides have no activity, and the entire catalytic activity decreases. When the Sn content is lower than a Pt:Sn of 10:1, the Sn oxide is less likely to improve the Pt activity.

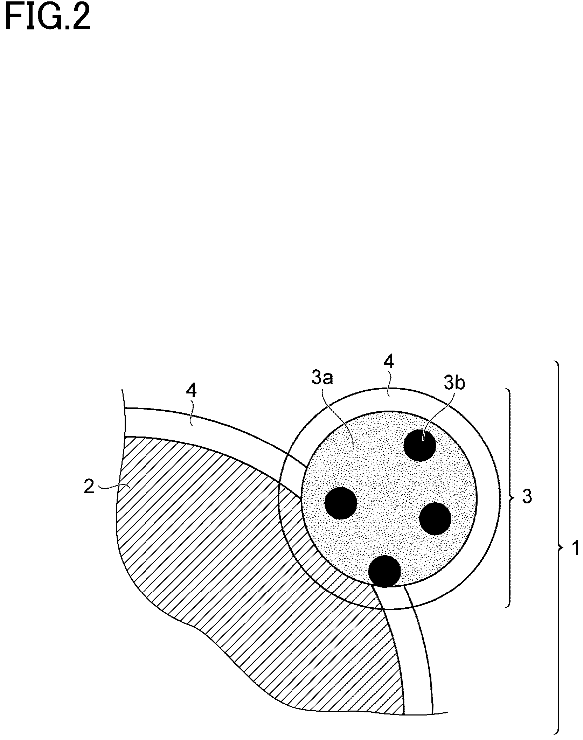

Although the metal particles 3 may include a Pt-Sn alloy phase and a Sn oxide phase, it is preferable that, as illustrated in Fig. 2, the metal particles 3 include a Pt phase 3a and a Sn oxide phase 3b. The metal particles 3 preferably include the Pt phase 3a and the Sn oxide phase 3b, with the Sn oxide phase 3b dispersed in the Pt phase 3a.

At least a part of the Sn oxide phase 3b is preferably exposed on the surface of the metal particles 3.

Pt-Sn alloy particles can be heat-treated in an oxidizing atmosphere such as an oxygen-containing atmosphere to yield Pt- and Sn-containing metal particles having a Sn oxide phase. In particular, heat treatment in the presence of sufficient oxygen can easily produce the metal particles 3 with the Pt phase 3a and the SnOₓ phase (e.g., a SnO₂ phase) 3b separated.

The phase separation into the Pt phase and the SnOₓ phase induced by heat-treating the Pt-Sn alloy allows the SnOₓ phase to be selectively placed on the Pt particles and also promotes electron donation from the SnOₓ to the Pt, increasing the catalytic activity of the Pt.

### (Ionic Liquid)

The ionic liquid is in contact with the surface of the metal particles 3. The contact between the ionic liquid and the surface of the Pt phase of the metal particles 3 suppresses water-induced oxide formation and flooding in the membrane electrode assembly.

Furthermore, the ionic liquid may be in contact with the surface and interior of the conductive support 2.

The ionic liquid 5 is not specifically limited but is preferably an imidazolium salt. The imidazolium salt is a salt of a cation with an imidazole ring structure and a counter anion. An example of the cation is described below. R and R' are each independently -CH₃, -C₂H₅, -C₃H₇, - C₄H₉, -C₆H₁₃, or -CH₂-CH=CH₂.

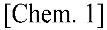

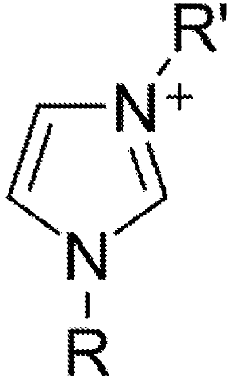

Examples of the counter anion include Cl⁻, Br⁻, I⁻, BF₄⁻, PF₆⁻, FSI((FSO₂)₂N⁻), and TFSI((CF₃SO₂)₂N⁻).

In particular, the ionic liquid 5 preferably contains a 1-alkyl-3-methylimidazolium bis(trifluoromethanesulfonyl)imide. Examples of the alkyl group include methyl, ethyl, propyl, butyl, pentyl, heptyl, hexyl, octyl, nonyl, and decyl. The alkyl group is particularly preferably butyl. In other words, the ionic liquid 5 is more preferably 1-butyl-3-methylimidazolium bis(trifluoromethanesulfonyl)imide.

### (Composition of Catalyst Particle)

Relative to a total of 100 parts by mass of the conductive support and the metal particles, the metal particle content of the catalyst particle 1 may be 30 parts by mass or more and 60 parts by mass or less. The metal particle content is particularly preferably 50 parts by mass. When the metal particle content is less than 30 parts by mass, the catalyst layer in the membrane electrode assembly may be thicker, and the I-V characteristics may be difficult to improve. When the metal particle content is greater than 60 parts by mass, the metal particles may be difficult to disperse over the conductive support, and the resultant metal particle aggregation may reduce the mass activity.

The amount of the ionic liquid 5 in the catalyst particle 1 (the amount of the impregnated ionic liquid 5) may correspond to 15 vol% or more and 80 vol% or less of the volume of pores in the conductive support 2 and the metal particles 3. More specifically, the amount of the ionic liquid 5 contained in the catalyst particle 1 is preferably within the range of 30 vol% or more and 60 vol% or less of the volume of pores in the conductive support 2 and the metal particles 3 of the catalyst particle 1, and more preferably within the range of 45 vol% or more and 55 vol% or less. The volume of pores in the conductive support 2 and the metal particles 3 of the catalyst particle 1 can be determined by, for example, the low-temperature nitrogen adsorption method. In the present embodiment, the volume of pores is the total pore volume ranging from 2 nm to 100 nm. When the amount of the impregnated ionic liquid 5 is less than 15 vol% of the pore volume of the catalyst particle, the ionic liquid 5 may provide insufficient oxygen reduction activity. When the amount of the impregnated ionic liquid 5 is larger than 80 vol% of the pore volume of the catalyst particle, the ionic liquid 5 cannot be stably retained in the catalyst particles 1, and the ionic liquid 5 may partially flow out during the process of producing the catalyst particles 1, the liquid preparation process, or power generation in a fuel cell that incorporates electrodes containing the catalyst particles 1. When the amount of the impregnated ionic liquid 5 is large, oxygen is less permeable from the ionic liquid layer to the surface of the metal particles, which may increase the resistance and reduce the I-V performance.

### [Method for Producing Catalyst Particles]

The above-described catalyst particles can be produced as described below.

Conductive supports loaded with Pt-Sn alloy particles are prepared. Any of the known synthesis methods may be used. Next, the conductive supports loaded with the Pt-Sn alloy particles are heat-treated in an oxygen atmosphere, such as air, to yield catalyst particles including a Pt or Pt-Sn phase and a Sn oxide phase.

An increase in heat treatment temperature promotes the phase separation of the Pt-Sn alloy particles into the metal phase and the Sn oxide phase. However, because the G/D ratio of the conductive supports decreases, it is preferable to adjust the heat treatment temperature and time as appropriate.

Next, the conductive supports loaded with the catalyst particles are impregnated with an ionic liquid. Specifically, after the conductive supports loaded with the catalyst particles are impregnated with an ionic solution, the solvent may be removed. The solvent is, for example, acetonitrile. As a result, the ionic liquid adheres to the surface of the metal particles.

### <Membrane Electrode Assembly for Fuel Cell>

The membrane electrode assembly for a fuel cell according to the present embodiment includes a polymer electrolyte membrane and a catalyst layer (electrode catalyst layer) containing the catalyst particles 1. The membrane electrode assembly for a fuel cell according to the present embodiment includes, for example, a polymer electrolyte membrane and a pair of catalyst layers containing the catalyst particles 1 and enclosing the polymer electrolyte membrane from above and below. The anode catalyst layer may not contain the catalyst particles 1, and only the cathode catalyst layer may contain the catalyst particles 1.

The polymer electrolyte membrane is formed from a polymeric material having proton conductivity, and for example, a fluorine-based electrolyte membrane or a hydrocarbon-based polymer electrolyte membrane may be used. Examples of usable fluorine-based polymer electrolyte membranes include Nafion (registered trademark) manufactured by DuPont, Flemion (registered trademark) manufactured by Asahi Glass Co., Ltd., Aciplex (registered trademark) manufactured by Asahi Kasei Corporation, and Gore Select (registered trademark) manufactured by Gore. Examples of hydrocarbon-based polymer electrolyte membranes include electrolyte membranes of sulfonated polyether ketone, sulfonated polyether sulfone, sulfonated polyether ether sulfone, sulfonated polysulfide, and sulfonated polyphenylene. The thickness of the polymer electrolyte membrane can be, for example, 0.05 to 0.25 mm.

The catalyst layer may further contain a conductive additive in addition to the above-described catalyst particles. Examples of conductive additives include vapor-grown carbon fibers (VGCFs), thin-layer graphene, and carbon nanotubes (CNTs), and in particular, VGCF is more preferable.

The catalyst layer has a linear material content, such as a VGCF content, preferably falling within the range of 0.1 parts by mass or more and 45 parts by mass or less relative to 100 parts by mass of the entire catalyst layer, more preferably within the range of 1 part by mass or more and 30 parts by mass or less, and still more preferably within the range of 10 parts by mass or more and 20 parts by mass or less. When the catalyst layer has a fibrous material content in these numerical ranges, the fibrous material can impart more excellent electronic conductivity to the catalyst layer and also contribute to maintaining the structure of the catalyst layer.

The catalyst layer may further contain ionomer (polymer electrolyte). The ionomer in the catalyst layer may be the same as or different from the ionomer in the polymer electrolyte membrane.

The ionomer may be used in the catalyst layer according to the present embodiment in an amount such that the ratio of the mass of the ionomer to the mass of the catalyst particle 1 (mass of ionomer/(total mass of conductive supports, metal particles, and ionic liquid)) is 0.2 or more and 0.4 or less. When the ratio is lower than 0.2, insufficient proton conductivity results in increased resistance, which may reduce the I-V performance. When the ratio is higher than 0.4, the reduced pores in the catalyst layer may cause insufficient water release or oxygen diffusion, which may reduce the I-V performance.

### <Fuel Cell>

The fuel cell according to the present embodiment includes the above-described membrane electrode assembly. For example, the fuel cell according to the present embodiment includes a pair of gas diffusion layers, with each gas diffusion layer facing the corresponding catalyst layer in the above-described membrane electrode assembly. The cathode (positive electrode) and the anode (negative electrode) are each formed by the corresponding gas diffusion layer and catalyst layer.

### (Advantageous Effects of Present Embodiment)

The catalyst particle 1 according to the present embodiment exhibits the advantageous effects described below.
(1) In the catalyst particle 1 and membrane electrode assembly according to the present embodiment,
   the metal particles contain Pt and Sn, the Sn in the metal particles is partially or entirely in form of an oxide, and the metal particles have surfaces at least partially in contact with the ionic liquid.

With this structure, the Sn oxide phase present in the metal particles inhibits Pt oxidation, improving the durability. Furthermore, the contact of the ionic liquid with at least a part of the surface of the metal particles can reduce the hydrophilicity provided by the SnOₓ phase on the surface of the metal particles, suppressing flooding in the catalyst layer of the membrane electrode assembly.

(2) An electrode catalyst layer according to an example of the present embodiment contains the above-described catalyst particles 1 and a conductive additive.

With this structure, the conductive additive can compensate for the decrease in electronic conductivity caused by reduced crystallinity of carbon due to the heat treatment during the synthesis of the catalyst particles.

### [Examples]

The present invention will now be described in more detail with reference to Examples. However, the present invention is not limited to the Examples.

### <Synthesis of Carbon Loaded with Pt Particles (Catalyst A)>

Carbon loaded with Pt particles was synthesized by a known method, with Pt deposited at a Pt/C ratio of 50/50 (wt/wt), and the carbon support used had a G/D band ratio higher than or equal to 1.6 in Raman spectra.

### <Synthesis of Carbon Loaded with Pt-Sn Alloy Particles (Catalyst B)>

Carbon loaded with Pt-Sn alloy particles was synthesized by a known method, with Pt-Sn deposited at a Pt-Sn/C ratio of 50/50 (wt/wt), and the carbon support used had a G/D band ratio higher than or equal to 1.6 in Raman spectra. The Pt-Sn alloy particles had an atomic ratio of 3:1. A part of the Sn in the Pt-Sn alloy particles was partially oxidized to SnOₓ in the work environment.

### <Synthesis of Carbon Loaded with Metal Particles with SnO₂ Phase Dispersed over Pt Phase (Catalyst C)>

The synthesized carbon loaded with Pt-Sn alloy particles (catalyst B) was subjected to heat treatment (at 200 °C to 400 °C for 1 hour) under air to synthesize carbon loaded with metal particles with the SnO₂ phase dispersed over the Pt phase.

### <Synthesis of Ionic Liquid-impregnated Catalyst Particles (Catalyst D)>

The synthesized carbon loaded with Pt-Sn alloy particles (catalyst B) was added to acetonitrile and subjected to ultrasonic dispersion treatment for 30 minutes, followed by the addition of an ionic liquid equivalent to 50% of the pore volume of the carbon loaded with Pt-Sn alloy particles. After overnight stirring with a stirrer, the acetonitrile was removed using an evaporator, yielding ionic liquid-impregnated catalyst particles (catalyst D).

### <Synthesis of Ionic Liquid-impregnated Catalyst Particles (Catalyst E)>

The carbon loaded with metal particles with the SnO₂ phase dispersed over the Pt phase (catalyst C) was added to acetonitrile and subjected to ultrasonic dispersion treatment for 30 minutes, followed by the addition of an ionic liquid equivalent to 50% of the pore volume of the carbon loaded with the metal particles. After overnight stirring with a stirrer, the acetonitrile was removed using an evaporator, yielding ionic liquid-impregnated catalyst particles (catalyst E).

### (Example 1)

In accordance with <Synthesis of Ionic Liquid-impregnated Catalyst Particles (Catalyst E)>, catalyst C resulting from heat treatment was brought into contact with an ionic liquid to synthesize ionic liquid-impregnated catalyst particles (catalyst E).

The ionic liquid used was 1-butyl-3-methylimidazolium bis(trifluoromethanesulfonyl)imide. The Pt and the Sn in the metal particles had an atomic ratio of 3:1. The G/D ratio of the carbon was evaluated to be 1.1 by Raman spectroscopic analysis.

The ionic liquid-impregnated catalyst particles (catalyst E), ionomer, and VGCF were added to a mixed solution including water, IPA, and ethanol to prepare catalyst ink. The catalyst ink was applied to an electrolyte membrane to a platinum amount of 0.2 mg/cm² and dried to yield a cathode catalyst layer.

Subsequently, the carbon loaded with Pt particles (catalyst A), ionomer, and VGCF were added to a mixed solution including water, IPA, and ethanol to prepare catalyst ink. The catalyst ink was applied to the side of the electrolyte membrane opposite to the cathode catalyst layer to a platinum amount of 0.05 mg/cm² and dried to yield an anode catalyst layer, producing a membrane electrode assembly.

### (Example 2)

Catalyst E was produced in the same manner as in Example 1, except for the type of loaded carbon in the starting material. Specifically, in accordance with <Synthesis of Ionic Liquid-impregnated Catalyst Particles (Catalyst E)>, catalyst C resulting from heat treatment was brought into contact with an ionic liquid to synthesize ionic liquid-impregnated catalyst particles (catalyst E). The ionic liquid used was 1-butyl-3-methylimidazolium bis(trifluoromethanesulfonyl)imide. The Pt and the Sn in the metal particles had an atomic ratio of 3:1. The G/D ratio was evaluated to be 1.2 by Raman spectroscopic analysis.

The ionic liquid-impregnated catalyst particles (catalyst E), ionomer, and VGCF were added to a mixed solution including water, IPA, and ethanol to prepare catalyst ink. The catalyst ink was applied to an electrolyte membrane to a platinum amount of 0.2 mg/cm² and dried to yield a cathode catalyst layer.

Subsequently, the carbon loaded with Pt particles (catalyst A), ionomer, and VGCF were added to a mixed solution including water, IPA, and ethanol to prepare catalyst ink. The catalyst ink was applied to the side of the electrolyte membrane opposite to the cathode catalyst layer to a platinum amount of 0.05 mg/cm² and dried to yield an anode catalyst layer, producing a membrane electrode assembly.

### (Example 3)

Catalyst E was produced in the same manner as in Example 1, except for the type of loaded carbon in the starting material. Specifically, in accordance with <Synthesis of Ionic Liquid-impregnated Catalyst Particles (Catalyst E)>, catalyst C resulting from heat treatment was brought into contact with an ionic liquid to synthesize ionic liquid-impregnated catalyst particles. The ionic liquid used was 1-butyl-3-methylimidazolium bis(trifluoromethanesulfonyl)imide. The Pt and the Sn in the metal particles had an atomic ratio of 3:1. The G/D ratio was evaluated to be 1.7 by Raman spectroscopic analysis.

The ionic liquid-impregnated catalyst particles (catalyst E), ionomer, and VGCF were added to a mixed solution including water, IPA, and ethanol to prepare catalyst ink. The catalyst ink was applied to an electrolyte membrane to a platinum amount of 0.2 mg/cm² and dried to yield a cathode catalyst layer.

Subsequently, the Pt-loaded carbon (catalyst A), ionomer, and VGCF were added to a mixed solution including water, IPA, and ethanol to prepare catalyst ink. The catalyst ink was applied to the side of the electrolyte membrane opposite to the cathode catalyst layer to a platinum amount of 0.05 mg/cm² and dried to yield an anode catalyst layer, producing a membrane electrode assembly.

### (Example 4)

In accordance with <Synthesis of Ionic Liquid-impregnated Catalyst Particles (Catalyst D)>, carbon loaded with Pt-Sn alloy particles (catalyst B), prepared without heat treatment, was brought into contact with an ionic liquid to synthesize ionic liquid-impregnated catalyst particles (catalyst D). The ionic liquid used was 1-butyl-3-methylimidazolium bis(trifluoromethanesulfonyl)imide. The Pt and the Sn in the Pt-Sn alloy particles had an atomic ratio of 3:1. The G/D ratio was evaluated to be 2.0 by Raman spectroscopic analysis.

The ionic liquid-impregnated catalyst particles (catalyst D) and ionomer were added to a mixed solution including water, IPA, and ethanol to prepare catalyst ink, without the addition of VGCF. The catalyst ink was applied to an electrolyte membrane to a platinum amount of 0.2 mg/cm² and dried to yield a cathode catalyst layer.

Subsequently, the Pt-loaded carbon (catalyst A), ionomer, and VGCF were added to a mixed solution including water, IPA, and ethanol to prepare catalyst ink. The catalyst ink was applied to the side of the electrolyte membrane opposite to the cathode catalyst layer to a platinum amount of 0.05 mg/cm² and dried to yield an anode catalyst layer, producing a membrane electrode assembly.

### (Example 5)

Catalyst E was produced in the same manner as in Example 4, except for the type of loaded carbon in the starting material. Specifically, in accordance with <Synthesis of Ionic Liquid-impregnated Catalyst Particles (Catalyst D)>, carbon loaded with Pt-Sn alloy particles (catalyst B), prepared without heat treatment, was brought into contact with an ionic liquid to synthesize ionic liquid-impregnated catalyst particles (catalyst D). The ionic liquid used was 1-butyl-3-methylimidazolium bis(trifluoromethanesulfonyl)imide. The Pt and the Sn in the Pt-Sn alloy particles used had an atomic ratio of 3:1. The G/D ratio was evaluated to be 2.2 by Raman spectroscopic analysis.

The ionic liquid-impregnated catalyst particles (catalyst D) and ionomer were added to a mixed solution including water, IPA, and ethanol to prepare catalyst ink, without the addition of VGCF. The catalyst ink was applied to an electrolyte membrane to a platinum amount of 0.2 mg/cm² and dried to yield a cathode catalyst layer.

Subsequently, the Pt-loaded carbon (catalyst A), ionomer, and VGCF were added to a mixed solution including water, IPA, and ethanol to prepare catalyst ink. The catalyst ink was applied to the side of the electrolyte membrane opposite to the cathode catalyst layer to a platinum amount of 0.05 mg/cm² and dried to yield an anode catalyst layer, producing a membrane electrode assembly.

### (Example 6)

Catalyst E was produced in the same manner as in Example 2, except for the atomic ratio of Pt-Sn alloy particles in the starting material. Specifically, in accordance with <Synthesis of Ionic Liquid-impregnated Catalyst Particles (Catalyst E)>, catalyst C resulting from heat treatment was brought into contact with an ionic liquid to synthesize ionic liquid-impregnated catalyst particles (catalyst E). The ionic liquid used was 1-butyl-3-methylimidazolium bis(trifluoromethanesulfonyl)imide. The Pt and the Sn in the metal particles had an atomic ratio of 2:1. The G/D ratio was evaluated to be 1.2 by Raman spectroscopic analysis.

The ionic liquid-impregnated catalyst particles (catalyst E), ionomer, and VGCF were added to a mixed solution including water, IPA, and ethanol to prepare catalyst ink. The catalyst ink was applied to an electrolyte membrane to a platinum amount of 0.2 mg/cm² and dried to yield a cathode catalyst layer.

Subsequently, the Pt-loaded carbon (catalyst A), ionomer, and VGCF were added to a mixed solution including water, IPA, and ethanol to prepare catalyst ink. The catalyst ink was applied to the side of the electrolyte membrane opposite to the cathode catalyst layer to a platinum amount of 0.05 mg/cm² and dried to yield an anode catalyst layer, producing a membrane electrode assembly.

### (Example 7)

Catalyst E was produced in the same manner as in Example 2, except for the atomic ratio of Pt-Sn alloy particles in the starting material. Specifically, in accordance with <Synthesis of Ionic Liquid-impregnated Catalyst Particles (Catalyst E)>, catalyst C resulting from heat treatment was brought into contact with an ionic liquid to synthesize ionic liquid-impregnated catalyst particles (catalyst E). The ionic liquid used was 1-butyl-3-methylimidazolium bis(trifluoromethanesulfonyl)imide. The Pt and the Sn in the metal particles had an atomic ratio of 10:1. The G/D ratio was evaluated to be 1.2 by Raman spectroscopic analysis.

The ionic liquid-impregnated catalyst particles (catalyst E), ionomer, and VGCF were added to a mixed solution including water, IPA, and ethanol to prepare catalyst ink. The catalyst ink was applied to an electrolyte membrane to a platinum amount of 0.2 mg/cm² and dried to yield a cathode catalyst layer.

Subsequently, the Pt-loaded carbon (catalyst A), ionomer, and VGCF were added to a mixed solution including water, IPA, and ethanol to prepare catalyst ink. The catalyst ink was applied to the side of the electrolyte membrane opposite to the cathode catalyst layer to a platinum amount of 0.05 mg/cm² and dried to yield an anode catalyst layer, producing a membrane electrode assembly.

### (Example 8)

Catalyst E was produced in the same manner as in Example 2, except for the atomic ratio of Pt-Sn alloy particles in the starting material. Specifically, in accordance with <Synthesis of Ionic Liquid-impregnated Catalyst Particles (Catalyst E)>, catalyst C resulting from heat treatment was brought into contact with an ionic liquid to synthesize ionic liquid-impregnated catalyst particles (catalyst E). The ionic liquid used was 1-butyl-3-methylimidazolium bis(trifluoromethanesulfonyl)imide. The Pt and the Sn in the metal particles had an atomic ratio of 11:1. The G/D ratio was evaluated to be 1.2 by Raman spectroscopic analysis.

The ionic liquid-impregnated catalyst particles (catalyst E), ionomer, and VGCF were added to a mixed solution including water, IPA, and ethanol to prepare catalyst ink. The catalyst ink was applied to an electrolyte membrane to a platinum amount of 0.2 mg/cm² and dried to yield a cathode catalyst layer.

Subsequently, the Pt-loaded carbon (catalyst A), ionomer, and VGCF were added to a mixed solution including water, IPA, and ethanol to prepare catalyst ink. The catalyst ink was applied to the side of the electrolyte membrane opposite to the cathode catalyst layer to a platinum amount of 0.05 mg/cm² and dried to yield an anode catalyst layer, producing a membrane electrode assembly.

### (Example 9)

Ionic liquid-impregnated catalyst particles (catalyst E) were produced in the same manner as in Example 2. Specifically, in accordance with <Synthesis of Ionic Liquid-impregnated Catalyst Particles (Catalyst E)>, catalyst C resulting from heat treatment was brought into contact with an ionic liquid to synthesize ionic liquid-impregnated catalyst particles (catalyst E). The ionic liquid used was 1-butyl-3-methylimidazolium bis(trifluoromethanesulfonyl)imide. The Pt and the Sn in the metal particles had an atomic ratio of 3:1. The G/D ratio was evaluated to be 1.2 by Raman spectroscopic analysis.

The ionic liquid-impregnated catalyst particles (catalyst E) and ionomer were added to a mixed solution including water, IPA, and ethanol to prepare catalyst ink, without the addition of VGCF. The catalyst ink was applied to an electrolyte membrane to a platinum amount of 0.2 mg/cm² and dried to yield a cathode catalyst layer.

Subsequently, the Pt-loaded carbon (catalyst A), ionomer, and VGCF were added to a mixed solution including water, IPA, and ethanol to prepare catalyst ink. The catalyst ink was applied to the side of the electrolyte membrane opposite to the cathode catalyst layer to a platinum amount of 0.05 mg/cm² and dried to yield an anode catalyst layer, producing a membrane electrode assembly.

### (Comparative Example 1)

In accordance with <Synthesis of Pt-loaded Carbon (Catalyst A)>, Pt-loaded carbon (catalyst A) was synthesized. The G/D ratio was evaluated to be 1.7 by Raman spectroscopic analysis.

The Pt-loaded carbon (catalyst A) and ionomer were added to a mixed solution including water, IPA, and ethanol to prepare catalyst ink, without the addition of VGCF. The catalyst ink was applied to an electrolyte membrane to a platinum amount of 0.2 mg/cm² and dried to yield a cathode catalyst layer.

Subsequently, the Pt-loaded carbon (catalyst A), ionomer, and VGCF were added to a mixed solution including water, IPA, and ethanol to prepare catalyst ink. The catalyst ink was applied to the side of the electrolyte membrane opposite to the cathode catalyst layer to a platinum amount of 0.05 mg/cm² and dried to yield an anode catalyst layer, producing a membrane electrode assembly.

### (Comparative Example 2)

In accordance with <Synthesis of Carbon Loaded with Metal Particles with SnO₂ Phase Dispersed over Pt Phase (Catalyst C)>, catalyst particles (catalyst C) were synthesized through heat treatment. The Pt and the Sn in the metal particles had an atomic ratio of 3:1. The G/D ratio was evaluated to be 1.2 by Raman spectroscopic analysis.

The catalyst particles (catalyst C) and ionomer were added to a mixed solution including water, IPA, and ethanol to prepare catalyst ink, without the addition of VGCF. The catalyst ink was applied to an electrolyte membrane to a platinum amount of 0.2 mg/cm² and dried to yield a cathode catalyst layer.

Subsequently, the Pt-loaded carbon (catalyst A), ionomer, and VGCF were added to a mixed solution including water, IPA, and ethanol to prepare catalyst ink. The catalyst ink was applied to the side of the electrolyte membrane opposite to the cathode catalyst layer to a platinum amount of 0.05 mg/cm² and dried to yield an anode catalyst layer, producing a membrane electrode assembly.

### <Evaluation of Membrane Electrode Assembly>

With the produced membrane electrode assembly, gaskets, and gas diffusion layers (GDLs) incorporated in a JARI standard cell, the I-V characteristics were evaluated under the power generation conditions described in "Common Platform Technologies for Cell Evaluation and Analysis" in Development of Technology to Promote the Practical Application of Polymer Electrolyte Fuel Cells/Development of Basic Technology by NEDO.

A load response test described in "Common Platform Technologies for Cell Evaluation and Analysis" in Development of Technology to Promote the Practical Application of Polymer Electrolyte Fuel Cells/Development of Basic Technology by New Energy and Industrial Technology Development Organization (NEDO) was conducted for 6,000 cycles as a durability test.

After the durability test, the I-V characteristics were evaluated again.

**[Table 1]**

| Table 1 | Cathode catalyst | | | | | | Cathode catalyst layer | Evaluation | |
|---|---|---|---|---|---|---|---|---|---|
| | Catalyst | Atomic ratio | | Heat treatment | G/d ratio | Ionic liquid | Conductive additive | Pre-test voltage (1.5 A/cm²) | Post-test voltage (1.5 A/cm²) |
| | | Pt | Sn | | | | | | |
| Ex. 1 | E | 3 | 1 | Yes | 1.1 | Yes | Yes | Good | Good |
| Ex. 2 | E | 3 | 1 | Yes | 1.2 | Yes | Yes | Excellent | Good |
| Ex. 3 | E | 3 | 1 | Yes | 1.7 | Yes | Yes | Excellent | Excellent |
| Ex. 4 | D | 3 | 1 | No | 2.0 | Yes | No | Excellent | Good |
| Ex. 5 | D | 3 | 1 | No | 2.2 | Yes | No | Excellent | Good |
| Ex. 6 | E | 2 | 1 | Yes | 1.2 | Yes | Yes | Good | Good |
| Ex. 7 | E | 10 | 1 | Yes | 1.2 | Yes | Yes | Excellent | Good |
| Ex. 8 | E | 11 | 1 | Yes | 1.2 | Yes | Yes | Good | Good |
| Ex. 9 | E | 3 | 1 | Yes | 1.2 | Yes | No | Good | Good |
| Comp. Ex. 1 | A | 1 | 0 | No | 1.7 | No | No | - | - |
| Comp. Ex. 2 | C | 3 | 1 | Yes | 1.2 | No | No | Poor | Poor |

In table 1, the "Pre-test Voltage" and "Post-test Voltage" columns show comparison results of voltages at 1.5 A/cm² in Examples 1 to 9 and Comparative Example 2 determined by I-V measurements before and after durability testing, relative to the voltages in Comparative Example 1. The examples in which the voltage was more than 50 mV higher than that in Comparative Example 1 were rated as Excellent, the examples in which the voltage was up to 50 mV higher were rated as Good, and the examples in which the voltage was lower than that in Comparative Example 1 were rated as Poor.

Examples 1 to 9 show that the impregnation of the catalyst particles with the ionic liquid improves the voltages before and after durability testing, compared with Comparative Example 2. The examples further show that the voltage before durability testing increases further when the carbon used as the conductive support has a G/D ratio within the range of 1.2 to 2.2. Examples 2 and 9 also show that the addition of VGCF as a conductive additive improves the voltages before and after durability testing. Examples 2, 6, 7, and 8 show that the voltage before durability testing increases further when Pt and Sn have an elemental ratio of 3:1 to 10:1.

### [Industrial Applicability]

The fuel cell electrode material according to the present invention is used for electrodes in power sources for various mobile electronic devices, power sources for automobiles, or power sources for household electrical appliances.

### [Reference Signs List]

- 1: Catalyst particle
- 2: Conductive support (carbon)
- 3: Metal particle
- 4: Ionic liquid

## Claims

1. A catalyst particle comprising:
a conductive support; and
metal particles deposited on the conductive support,
wherein the metal particles contain Pt and Sn, the Sn in the metal particles is partially or entirely in a form of an oxide, and the metal particles have surfaces at least partially in contact with an ionic liquid.

2. The catalyst particle according to claim 1, wherein
the conductive support comprises carbon and exhibits a G-to-D band peak intensity ratio (G/D ratio) of 1.2 or greater and 2.2 or less in Raman spectroscopy at a laser wavelength of 532 nm.

3. The catalyst particle according to claim 1 or 2, wherein
the Pt and the Sn in the metal particles have an atomic ratio ranging from 3:1 to 10:1.

4. The catalyst particle according to claim 1 or 2, wherein
the ionic liquid is an imidazolium salt.

5. The catalyst particle according to claim 4, wherein
the ionic liquid is a 1-alkyl-3-methylimidazolium bis(trifluoromethanesulfonyl)imide.

6. The catalyst particle according to claim 4, wherein
the ionic liquid is 1-butyl-3-methylimidazolium bis(trifluoromethanesulfonyl)imide.

7. A membrane electrode assembly comprising:
a polymer electrolyte membrane; and
a cathode catalyst layer,
wherein the cathode catalyst layer contains the catalyst particle according to claim 1 or 2.

8. The membrane electrode assembly according to claim 7, wherein
the cathode catalyst layer further contains a conductive additive.

9. The membrane electrode assembly according to claim 8, wherein
the conductive additive comprises vapor-grown carbon fibers.

10. A fuel cell comprising the membrane electrode assembly according to claim 7.
